**Europäisches Patentamt**

**European Patent Office**

**Office européen des brevets**

(19)

(11) Numéro de publication : **0 091 377**
**B1**

(12)

# FASCICULE DE BREVET EUROPÉEN

(45) Date de publication du fascicule du brevet :
15.06.88

(51) Int. Cl.⁴ : **C 04 B 24/26**, C 04 B 24/30,
E 21 B 33/13

(21) Numéro de dépôt : 83400690.0

(22) Date de dépôt : 01.04.83

(54) Compositions de ciments pour cimentation de puits permettant de lutter contre le cheminement de gaz sous pression dans l'annulaire cimenté.

(30) Priorité : 06.04.82 FR 8205983
24.01.83 FR 8301031

(43) Date de publication de la demande :
12.10.83 Bulletin 83/41

(45) Mention de la délivrance du brevet :
15.06.88 Bulletin 88/24

(84) Etats contractants désignés :
DE GB IT NL

(56) Documents cités :
US-A- 2 742 441
US-A- 3 465 825
US-A- 4 086 201
US-A- 4 258 790
US-E- 28 780
PETROLEUM ENGINEER INTERNATIONAL, vol. 52,
no. 15, décembre 1980, pages 43-48, Dallas,
Texas,USA, D.K. SMITH: "Silica flour-mechanism for
improving cementing composition for high-temperature well conditions"
Le dossier contient des informations techniques
présentées postérieurement au dépôt de la demande
et ne figurant pas dans le présent fascicule.

(73) Titulaire : PUMPTECH N.V.
Atlantic House Noorderlaan 147 Bus 5C
B-2030 Antwerpen (BE)

(72) Inventeur : Parcevaux, Philippe André
31, rue de Terrenoire
F-42100 Saint Etienne (FR)
Inventeur : Piot, Bernard Maurice
21, rue des Drs. Charcot
F-42100 Saint Etienne (FR)
Inventeur : Vercaemer, Claude Joseph
12, rue du Beaujolais
F-42290 Sorbiers (FR)

(74) Mandataire : Richebourg, Michel François
Etudes et Fabrication Dowell Schlumberger Z.I.
Molina La Chazotte B.P. 90
F-42003 Saint-Etienne Cédex 1 (FR)

## Description

L'invention concerne des compositions de ciments pétroliers dont les composants, qui forment une combinaison originale, bloquent le phénomène dit « de gas-channeling » dès son apparition, par un mécanisme entièrement nouveau.

La notion de « gas-channeling » (cheminement du gaz sous pression dans l'annulaire cimenté) est extrêmement connue des professionnels de la cimentation des puits pétroliers.

On rappellera toutefois ici que le cheminement du gaz se produit après injection du laitier de ciment dans l'espace annulaire compris entre les formations traversées et le cuvelage du puits, lorsque le puits traverse une poche de gaz sous pression.

Le phénomène apparaît durant la prise du ciment, à partir du moment où cette prise atteint un degré suffisant pour que la pression hydrostatique ne soit plus, ou plus suffisamment, transmise, mais un degré insuffisant pour que le ciment s'oppose, au niveau de la poche de gaz, à l'infiltration de celui-ci dans le ciment en cours de prise, sous l'effet de la pression régnant dans la poche, qui n'est plus équilibrée par la pression hydrostatique.

Le gaz sous pression chemine alors dans la masse du ciment en cours de prise et/ou entre le ciment et les formations traversées, ce qui crée dans le ciment des conduits multiples qui peuvent atteindre la surface.

Ce phénomène peut de plus être favorisé par le retrait du ciment et éventuellement par les pertes de liquide du laitier de ciment par filtration vers les formations traversées, lorsque celles-ci sont poreuses, notamment (« fluid loss » ou « filtrat »).

Le cheminement du gaz est donc un problème très grave qui entraîne une fragilisation du ciment et des problèmes de sécurité en surface.

Le nombre de tentatives effectuées pour résoudre ce problème est à la mesure de sa gravité et de la préoccupation majeure des pétroliers à ce sujet depuis de nombreuses années.

L'insuccès total ou partiel de ces tentatives est d'autre part à la mesure des difficultés rencontrées qui n'ont pas à ce jour été surmontées, ou bien seulement très partiellement, malgré le besoin qui s'en fait sentir pour pratiquement toutes les compagnies pétrolières, et même lorsque le gaz se trouve sous une pression relativement faible.

On notera encore que les impératifs inhérents à la technique de la cimentation des puits viennent compliquer le problème : en particulier, si l'on utilise des additifs, il faut que le laitier reste facilement pompable durant plusieurs heures et que, de manière générale, ses caractéristiques ainsi que l'efficacité des additifs ne soient pas altérées par les conditions sévères de température et de pression régnant au fond du puits.

Il faut d'autre part conserver une bonne résistance à la compression, de bonnes caractéristiques de rhéologie, empêcher la séparation de l'eau sous forme d'eau « libre », ainsi que la perte de liquide par filtration dans les formations poreuses.

Il n'est donc pas étonnant, compte tenu du nombre et de la complexité des paramètres de la cimentation, et du caractère contradictoire de certains d'entre eux, que l'industrie pétrolière ne soit pas parvenue à résoudre de manière satisfaisante le problème du cheminement du gaz dans l'annulaire cimenté.

Dans l'art antérieur, on a tenté d'augmenter par l'addition d'un polymère soluble dans l'eau la viscosité de l'eau interstitielle (notamment par addition de polyéthylèneimine ou de dérivés de celle-ci).

On a tenté également de mélanger au laitier de ciment un monomère, tel que l'acrylamide, susceptible de subir une polymérisation-flash in situ avant que le laitier ne commence à épaissir, donc avant que le cheminement du gaz puisse apparaître. Il n'a cependant pas été possible de contrôler la polymérisation.

On a également tenté d'utiliser des ciments thixotropes ou expansibles qui se sont souvent révélés inefficaces.

Selon le brevet GP-A-1 460 508, on a tenté de mélanger au laitier de ciment un agent moussant. En fait, cet agent s'est révélé ne plus être disponible pour former une mousse stable sous l'action du gaz, car il était adsorbé sur les particules de ciment.

Le brevet US-A-4 304 248 décrit un procédé selon lequel on mélange au laitier un générateur de gaz in situ pour compenser la diminution de la pression hydrostatique.

Un générateur de gaz préconisé était la poudre d'aluminium, qui présentait déjà deux inconvénients : le véhicule de l'aluminium utilisé était un glycol, et le gaz produit était de l'hydrogène dont les dangers sont connus.

De plus, la production de gaz ne pouvait être contrôlée : trop faible, elle n'empêchait pas le cheminement du gaz ; trop forte, elle rendait le laitier fortement perméable.

Compte tenu de ce qui précède, il est surprenant de constater que l'invention résout enfin le problème du cheminement du gaz et ce, non seulement en conservant au ciment ses caractéristiques impératives (aptitudes au pompage, etc.), mais en améliorant également certaines de ces propriétés et en permettant donc d'inhiber le cheminement du gaz même à grande profondeur (c'est-à-dire, en particulier, même à une température de puits élevée pouvant être supérieure à 85 °C et au moins jusqu'à 100 °C).

2

Les compositions selon l'invention comportent quatre constituants essentiels :
a) ciment,
b) un latex styrène-butadiène,
c) un stabilisant du latex précisé ci-dessous,
d) de l'eau.

a) Le ciment est un ciment hydraulique appartenant à une classe quelconque parmi ceux utilisés de manière courante pour la cimentation des puits pétroliers.

Par « ciments hydrauliques », on désigne les ciments qui comprennent des composés de calcium, aluminium, silicium, oxygène et/ou soufre et qui prennent et durcissent par réaction avec l'eau.

Répondent notamment à cette définition, les ciments communément appelés « ciments Portland », par exemple ciment Portland ordinaire, ou à durcissement rapide ou extra-rapide, ou résistant aux sulfates, et autres ciments Portland modifiés ; les ciments communément appelés ciments alumineux, ciments d'aluminate de calcium à haute teneur en alumine ; et de tels ciments contenant de petites quantités d'accélérateurs ou de retardateurs de prise, d'agents d'entraînement d'air, ainsi que des ciments Portland contenant des constituants secondaires (cendres volantes, pouzzolane), etc.

b) Le latex est choisi parmi les latex styrène-butadiène et plus particulièrement parmi les latex styrène (70-30 % en poids)/butadiène (30-70 % en poids) ne comportant pas de groupes incompatibles avec le ciment.

Les % ci-dessus sont déterminés par le fait qu'une quantité trop importante de butadiène provoque une coagulation prématurée du latex, tandis qu'il ne se forme pas de film si le latex contient trop de styrène.

Certains documents (US-A-4 086 201, US-Re-28 780, US-A-2 742 441) font l'état de compositions de ciment pour mortiers ou revêtement de sols comportant un latex, dont les latex SBR.

Les latex ont été par ailleurs assez largement utilisés dans les ciments pétroliers il y a une dizaine d'années, mais sont beaucoup moins employés de nos jours.

Ainsi, les latex ont été antérieurement utilisés dans des ciments pétroliers pour améliorer les propriétés de résistance mécanique (à la compression, à la traction, au cisaillement, etc.) du ciment. On a utilisé dans ce but des latex styrène-butadiène, par exemple selon les brevets US-A-3 228 907 et US-A-4 151 150.

De même, le brevet US-Re-28 780 décrit des poudres de résines synthétiques qui améliorent la prise de liants hydrauliques, en combinaison avec, entre autres, un produit de condensation mélamine/formaldéhyde à groupes sulfonates. L'application est cependant totalement étrangère au secteur des puits pétroliers et à la migration de gaz (adhésifs, revêtements de sol, produits pour façade, mortier pour pulvérisation, etc.).

Dans le brevet US-A-3 228 907, on ne préconise pas de stabilisant et on observe une floculation du latex : les compositions préconisées sont donc totalement inopérantes face au phénomène particulier du cheminement du gaz. De plus, les compositions enseignées par ce brevet se sont révélées être difficilement pompables.

Dans le brevet US-A-4 151 150, l'addition d'un agent de surface est préconisée (laurylsulfate de sodium), mais celui-ci n'empêche pas la coagulation du latex. Les compositions décrites dans ce brevet sont donc également inefficaces pour lutter contre le cheminement du gaz. De plus, leur emploi est limité à la température ambiante.

Le brevet belge BE-A-886 819 décrit un ciment contenant un latex et une cire, conférant une résistance à la pénétration de l'eau. D'une part, cette propriété ne se manifeste qu'à l'état totalement durci et, d'autre part, est due à la présence de cire et non de latex.

Le brevet US-A-3 058 520 préconise l'emploi d'un latex (polyvinylacétate) afin de réduire le filtrat. Cependant, d'une part, ce brevet ne mentionne pas le problème du cheminement du gaz et surtout, d'autre part, l'emploi des compositions décrites est limité par une limite en température d'environ 50 °C.

Le brevet US-A-4 258 790 HALE décrit un additif améliorant le filtrat ; un dispersant naphtalène-sulfonate/formaldéhyde est utilisé, mais aucun latex.

Il ressort de ce qui précède que, si les latex étaient bien utilisés dans le domaine pétrolier, d'une part, ils n'ont jamais été préconisés pour lutter contre le cheminement du gaz, alors que ce problème préoccupait déjà à cette époque les professionnels de l'industrie du pétrole et, d'autre part, les compositions préconisées n'auraient pas pu résoudre ce problème, comme établi ci-dessus, notamment en raison de difficultés de pompage, de floculation du latex, et/ou de possibilités d'emploi limitées aux faibles températures.

c) Les compositions selon l'invention contiennent impérativement un stabilisant du latex (qui agit par ailleurs, à titre secondaire, comme dispersant des particules de ciment).

Ce stabilisant a un rôle essentiel puisqu'il inhibe les propriétés filmogènes du latex (même si on laisse un échantillon de la composition exposé à l'air), mais permet néanmoins à cette propriété d'apparaître en présence du phénomène de cheminement du gaz, et dans ce cas seulement.

Ainsi, le stabilisant utilisé selon l'invention modifie profondément la fonction filmogène du latex, puisqu'il fait que cette fonction n'apparaît qu'en réponse à l'apparition de gaz dans le laitier.

Cette réponse sélective surprenante est à l'origine du fait que les compositions selon l'invention conduisent à un ciment présentant un ensemble d'excellentes propriétés, c'est-à-dire blocage immédiat du cheminement du gaz et amélioration des autres propriétés du ciment (rhéologie, etc.), ensemble de propriétés jamais rencontré auparavant. Le caractère surprenant de la réponse filmogène sélective du latex est accentué par le fait que, parmi les stabilisants qui ont été testés, seul un petit nombre de composés stabilisants parvient à modifier ainsi les propriétés du latex.

Les stabilisants utiles selon l'invention sont les sels de métaux alcalins du produit de condensation de l'acide mononaphtalène-sulfonique et de formaldéhyde et, de préférence, le sel de sodium.

On avait, dans l'art antérieur, préconisé un produit de condensation du formaldéhyde et d'acide naphtalène-sulfonique comme agent réduisant le filtrat soit seul (US-A-3 465 825), mais alors avec des résultats très médiocres, soit en combinaison avec un polyoxyéthylène (US-A-3 998 773), son action étant alors limitée en température à 65 °C ou en combinaison avec une polyvinylpyrolidone et une carboxyméthylcellulose (US-A-4 258 790 HALE).

Ainsi, ce type de produit n'avait jamais été préconisé dans la fonction totalement différente (essentiellement stabilisant « sélectif » du latex) qu'il remplit dans les compositions selon l'invention.

Il a également été découvert qu'aux températures élevées d'emploi, lorsque des retardateurs sont nécessaires pour régler le temps de prise du ciment, quelques retardateurs anioniques comme des lignosulfonates, des lignosulfonates partiellement désulfonés ou un acide polyhydroxy dicarboxylique peuvent remplacer partiellement le stabilisant préféré. On a découvert que ces retardateurs pour ciment se comportent comme les résines de mélamine et formaldéhyde modifiées par un acide sulfonique ou un sulfite, mais avec une efficacité très inférieure. De plus, la quantité d'un tel retardateur pouvant être ajoutée au ciment dépend dans une large mesure du temps de prise et non de la stabilité du latex.

Ainsi, le rapport entre le retardateur anionique et le stabilisant dépend des efficacités respectives du retardateur à la fois en ce qui concerne le retard apporté à la prise du ciment et la stabilisation du latex.

Les compositions selon l'invention permettent d'ouvrir une nouvelle voie de recherches dans la lutte contre le « gas channeling », en permettant pour la première fois d'utiliser efficacement l'action du gaz lui-même sur un additif contenu dans le laitier de ciment.

De plus, les compositions selon l'invention repoussent considérablement la limite de profondeur du puits jusqu'à laquelle on peut lutter contre le cheminement du gaz puisqu'elles sont efficaces au moins jusqu'à 100 °C.

On notera que les compositions antérieures de ciment contenant un latex n'étaient pas utilisables au-delà de 50 °C environ et que rien ne suggérait que l'on puisse travailler efficacement avec des compositions appartenant à ce type général, à 85 °C ou plus et a fortiori sans cheminement de gaz.

Pour l'homme du métier, cette différence de 35 °C ou plus représente un gain considérable en termes de profondeur de puits dans un domaine où il n'est pas exagéré de souligner que chaque gain, fût-il de quelques degrés, est hautement appréciable.

Il a également été découvert selon l'invention que les compositions de laitier de ciment ci-dessus pouvaient même être utilisées dans une plage de températures beaucoup plus élevées, c'est-à-dire de 108-112 °C jusqu'à la température de dégradation du latex (soit 270-300 °C pour un latex styrène-butadiène 50/50 en % en poids).

Pour que le domaine d'application couvre des températures aussi élevées, il est préférable d'incorporer, en plus des quatre constituants principaux a) à d) énumérés ci-dessus (ciment, latex, stabilisant du latex, eau), une farine de silice dont il est essentiel que la répartition granulométrique soit similaire à celle de la poudre de ciment utilisée, afin que la silice n'intervienne pas sur la quantité de latex nécessaire pour empêcher le cheminement de gaz.

La présente invention concerne donc selon une variante particulièrement intéressante la combinaison de cinq constituants essentiels : a) ciment, b) latex, c) stabilisant du latex, d) eau et e) farine de silice comme compositions de laitiers de ciment pour la cimentation des puits pétroliers, permettant d'inhiber le cheminement du gaz sous pression jusqu'à des températures pouvant atteindre 270-300 °C environ, température de début de dégradation sous la pression atmosphérique dans l'air des principaux latex utilisés.

Selon cette variante de l'invention, on incorporera :
— de 20 à 50 % en poids de farine de silice par rapport au ciment, de préférence 30 à 35 % ;
— de 20 à 30 % en poids de latex par rapport au ciment ;
— de 3 à 15 % en poids de stabilisant du latex par rapport au latex.

Les pourcentages ci-dessus de latex, et ceux dont il sera question ci-après sont basés sur le volume total de latex et non sur le composant polymère actif.

Les compositions selon l'invention pourront contenir les additifs classiques pour ciment tels que, principalement, des agents antimousse (par exemple à base de tributylphosphate ou de polypropylèneglycol), retardateurs de prise, etc.
— Autres exemples d'antimousse : dibutylphtalate, polyorganosiloxannes.
— Exemples de retardateurs de prise : lignosulfonates, lignosulfonates partiellement désulfonés, acide polyhydroxymonocarboxylique ou polyhydroxydicarboxylique (comme retardateurs haute température et, parmi eux, acide tartrique et tartrates, acide D-gluconique, D-gluconates, acide heptonique et heptonates).

— Autres additifs classiques pour ciment :

accélérateurs : sels dè calcium

allégeants : pouzzolanes, cendres volantes, terres diatomées, silicates, perlite expansée, gilsonite, charbon, charbons actifs, microsphères de verre ou de céramique, etc.

alourdissants : oxydes de fer, de titane, barite, etc.

Selon l'invention, les proportions des divers constituants seront les suivantes (en poids sauf indication contraire) :

% latex/ciment : 5-30, mais la concentration en latex est directement liée à la température d'application.

De préférence :

5-10 % pour une température d'application de 30 °C

10-15 % pour une température d'application de 50 °C

15-20 % pour une température d'application de 85 °C

20-25 % pour une température d'application de 100 °C

20-30 % pour une température d'application > 110 °C environ

% stabilisant/latex : environ 1-20 et, de préférence, 3-15

% retardateur/ciment : 0,05-4 selon la température (éventuellement)

% agent antimousse/ciment : 4-6 cm³/kg (éventuellement)

une teneur en eau préférée sera de l'ordre d'environ 30 à 60 % en poids de ciment et, de préférence, d'environ 38 à 46 % en poids de ciment dans le cas d'un ciment Portland, moins le volume des additifs liquides.

Les meilleurs résultats ont été obtenus avec le latex Rhodopas SB012 défini ci-dessous.

D'autres caractéristiques et avantages de l'invention seront mieux compris à la lecture des exemples non limitatifs suivants, et du dessin annexé qui comprend :

figure 1 : observation au microscope électronique de la composition de ciment [X 5000] :

ciment Cemoil classe G

Rhodopas SB012 14 % en poids/ciment

eau 44 % en poids/ciment moins le volume du latex ne contenant pas de stabilisant (l'échantillon a été lyophilisé après que le ciment est devenu non pompable par agitation à 85 °C) ;

figures 2 et 3 : observation au microscope électronique de la composition de ciment (figure 2 : X 2500 ; figure 3 : X 10000) :

ciment Dyckerhoff Gulf classe G

Rhodopas SB012 : 14 % en poids/ciment

stabilisant 8 % en poids de latex

eau 44 % en poids/ciment moins le volume des liquides (l'échantillon a été lyophilisé après 10 jours de durcissement à 85 °C après que le ciment est devenu non pompable en raison de son hydratation) ;

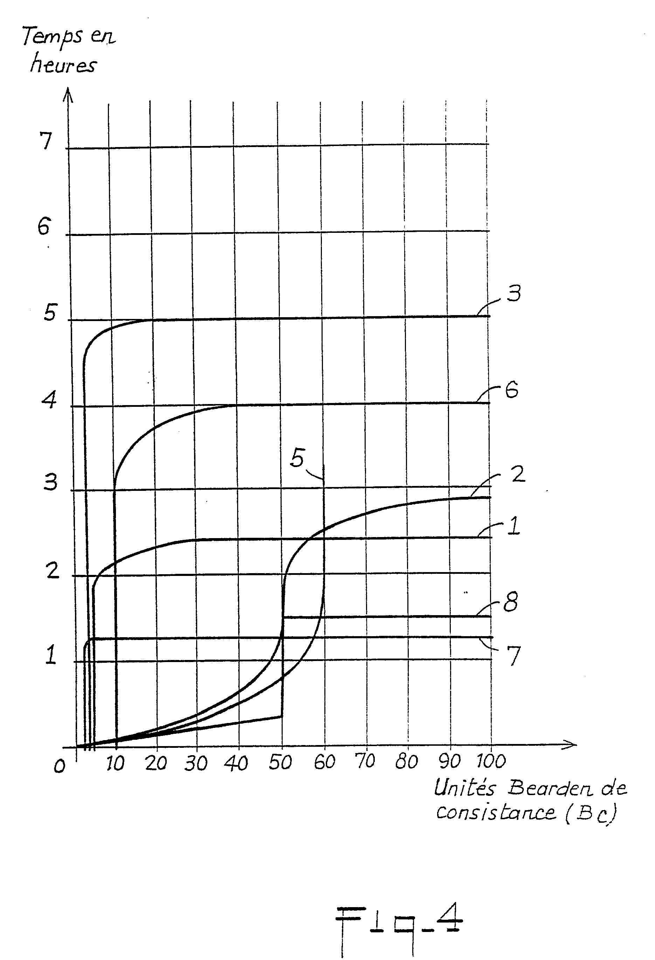

figure 4 : essai d'épaississement simulé en puits des compositions décrites dans le tableau II ci-après.

Les conditions simulées sont les suivantes :

| | |
|---|---|
| température à la surface | 26,7 °C |
| pression à la surface | 105,45 kg/cm² |
| pression au fond | 717,06 kg/cm² |
| température de circulation au fond | 85 °C |
| temps pour atteindre la température finale | 44 min |
| taux de chauffage | 1,32 °C/min |
| temps pour atteindre la pression finale | 44 min |

(API : procédure n° 7g5) (Essai au consistomètre pressurisé) Les essais 2, 5 et 8 ont été menés sous la pression atmosphérique.

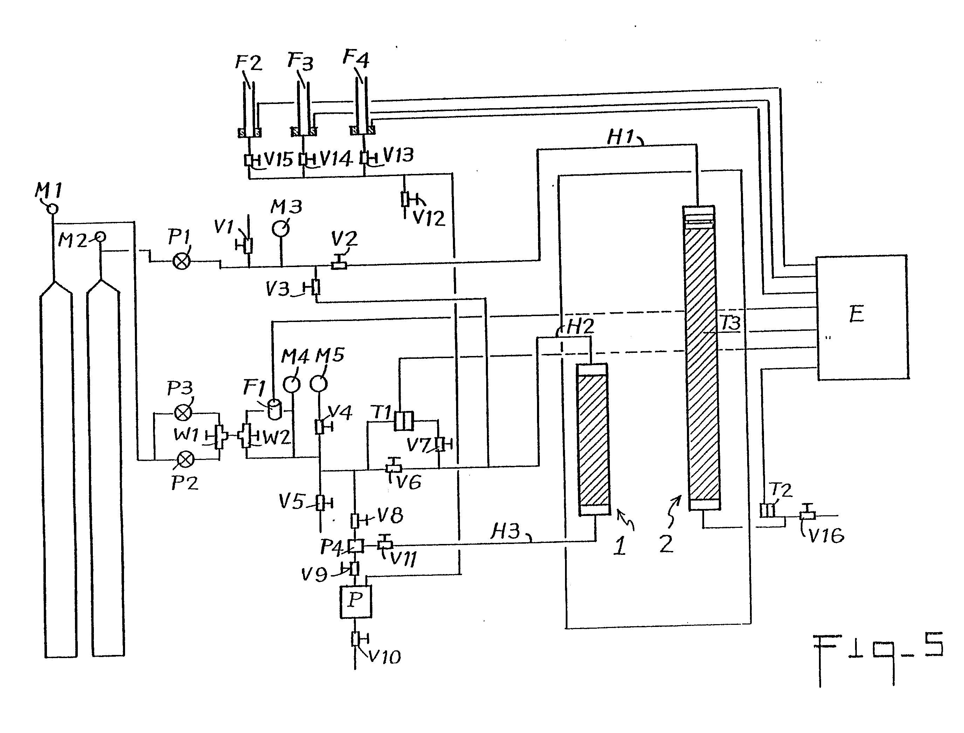

figure 5 : schéma de la cellule pour essai de cheminement de gaz utilisée dans l'exemple 3.

Sur cette figure, les références ont les significations suivantes :

E : enregistreurs

1 : cellule DP (cf. exemple 3 ci-après)

5

2 : cellule HP (cf. exemple 3 ci-après)
P : piège à eau
Les autres références sont utilisées dans leur sens connu de l'homme de métier :
V : vanne
T : capteur de pression
P : régulateur de pression
M : manomètre
F : débitmètre
H : flexible

figure 6 : observation au microscope électronique de la composition de ciment [laitier DP 24 ; X 5000] :

| | |
|---|---|
| ciment Cemoil classe G | |
| agent antimousse | 4,44 cm$^3$/kg ciment |
| DOW latex 465 | 18 % en poids/ciment |
| stabilisant | 6 % en poids/latex |
| eau | 44 % en poids/ciment moins le volume d'additifs liquides |

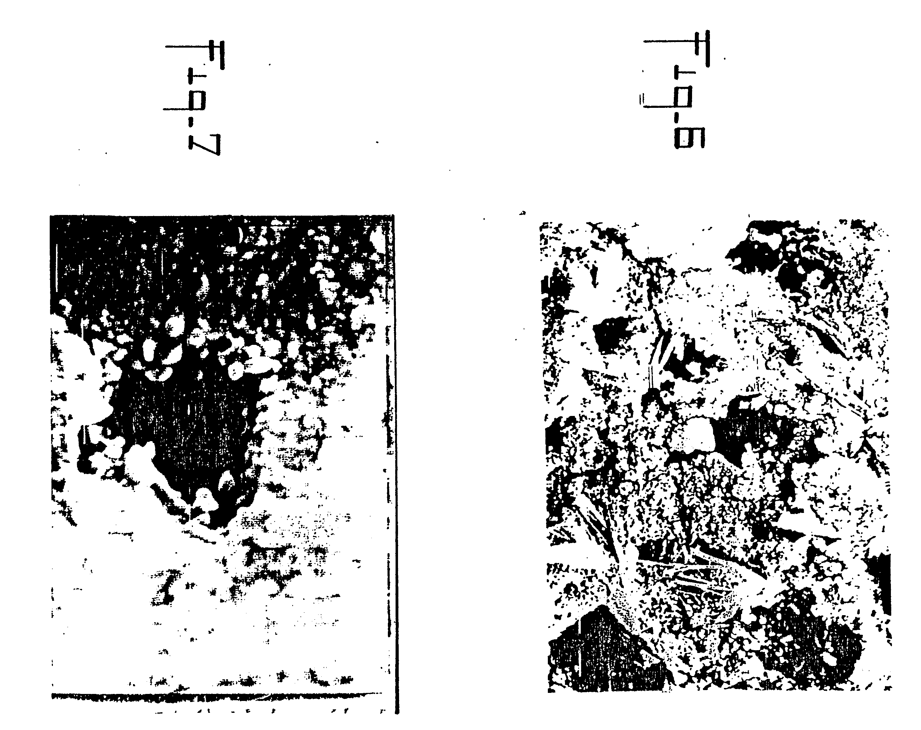

figure 7 : observation au microscope électronique de la composition de ciment [X 10000] :

| | |
|---|---|
| ciment Dyckerhoff North Classe G | |
| agent antimousse | 4,44 cm$^3$/kg ciment |
| Rhodopas SB012 | 19 % en poids/ciment |
| stabilisant | 12 % en poids/latex |
| retardateur | 0,1 % en poids/ciment |
| eau | 44 % en poids/ciment moins le volume d'additifs liquides |

[les figures 6 et 7 correspondent à un échantillon lyophilisé après un essai de cheminement de gaz à 85 °C, lorsque le ciment avait durci, dans la cellule où aucun gaz n'était admis]

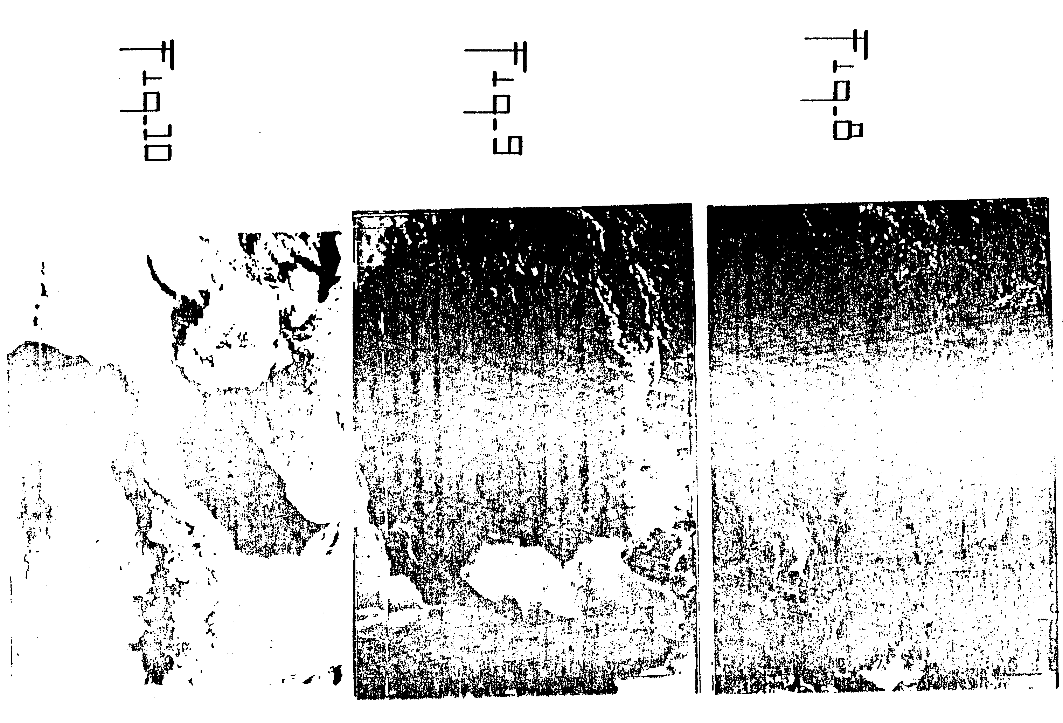

figures 8 et 9 : observation au microscope électronique de la composition de ciment (figure 8 : X 2500 ; figure 9 : X 5000)

| | |
|---|---|
| ciment Dyckerhoff North Classe G | |
| agent antimousse | 4,44 cm$^3$/kg ciment |
| Litex 6301 | 19 % en poids/ciment |
| stabilisant | 15 % en poids/latex |
| retardateur | 0,1 % en poids/ciment |
| eau | 44 % en poids/ciment moins le volume d'additifs liquides |

[les figures 8 et 9 correspondent à des échantillons lyophilisés après un essai de cheminement de gaz à 85 °C, lorsque le ciment avait durci, provenant de la cellule où le gaz était admis]

figure 10 : observation au microscope électronique de la composition de ciment [X 2500] :

| | |
|---|---|
| ciment Cemoil Classe G | |
| DOW latex 465 | 19 % en poids/ciment |
| stabilisant | 6 % en poids/latex |
| eau | 44 % en poids/ciment moins le volume d'additifs liquides |
| agent antimousse | 4,44 cm$^3$/kg de ciment |

[échantillon lyophilisé après un essai de cheminement de gaz à 85 °C, lorsque le ciment a durci, et provenant de la cellule DP dans laquelle le gaz était admis]
Une composition préférée présente la composition suivante :
ciment API classe G
latex : Rhodopas SB012 à raison de 5 à 30 % en poids/ciment
stabilisant : sel de sodium du produit de condensation de l'acide β-naphtalènesulfonique avec le formaldéhyde à raison de 3-15 % en poids/latex
eau douce : 44 % en poids/ciment moins le volume du latex + stabilisant
la concentration en latex dépend de la température :

30 °C ~ 5-10 %
50 °C ~ 10-15 %
85 °C ~ 15-20 %
100 °C ~ 20-25 %

6

Selon l'invention, il est possible d'utiliser aussi bien une eau de gâchage fraîche que de l'eau de mer, des eaux salées, de 0 % NaCl jusqu'à saturation en sel (37 % NaCl).

Exemple 1

Stabilisation de latex dans des laitiers de ciment

La stabilité de latex dans des laitiers de ciment a été appréciée dans les deux conditions a) et b) ci-dessous :

a) ciment fluide

en mesurant les propriétés rhéologiques du laitier de ciment après un certain temps d'agitation à une température donnée ;

b) ciment ayant subi la prise et durci

par observation visuelle en utilisant un microscope électronique à balayage, après lyophilisation des échantillons de ciment.

Propriétés rhéologiques

Des laitiers de ciment ont été mélangés à la température ambiante à l'aide d'un mélangeur à fort taux de cisaillement, du type Waring Blendor, selon la norme API, spécification 10, section 5, puis agités durant 20 min à une température donnée dans un appareillage connu sous le nom de consistomètre atmosphérique, du type CHANDLER, selon la norme API spécification 10, section 9.

On a ensuite mesuré les paramètres rhéologiques à l'aide d'un viscosimètre du type FANN 35 V-G, à la même température, selon la norme API spécification 10, annexe H.

Dans le cas d'une complète instabilité du latex, le laitier de ciment ne peut pas être coulé lorsqu'on le sort du consistomètre, ou même avant la fin de la période d'agitation, ceci étant indiqué par une consistance du laitier largement au-dessus de 100 unités, mesurée à l'aide d'un ressort calibré ou d'un potentiomètre.

Ainsi, on ne peut pas mesurer tous les paramètres rhéologiques à l'aide du viscosimètre FANN 35 VG et le critère d'instabilité sera l'impossibilité de couler le laitier. Si le laitier de ciment peut être coulé, on mesurera les paramètres rhéologiques et le critère de stabilité du latex sera basé sur les valeurs des paramètres rhéologiques, tels que viscosité plastique et seuil de cisaillement (« yield stress »).

Le tableau I ci-après montre l'influence du stabilisant sur la stabilité du latex dans des laitiers de ciment contenant divers types de latex polystyrène-butadiène, avec ou sans stabilisant, à différentes températures, sur la base des propriétés d'écoulement des laitiers de ciment.

Les latex suivants ont été utilisés (% en poids).

|  | Styrène (%) | Butadiène (%) |
| --- | --- | --- |
| DOW 465 | 66 | 33 |
| LITEX 6301 | 50 | 50 |
| RHODOPAS SB012 | 50 | 50 |

L'agent antimousse utilisé est un polyglycol d'un poids moléculaire moyen de 4000.

Le stabilisant utilisé est le sel de sodium du produit de condensation de l'acide β-naphtalènesulfonique avec le formaldéhyde.

Des essais de sédimentation effectués au même moment sur les mêmes laitiers de ciment ont montré que l'impossibilité de couler le laitier est en relation directe avec une floculation du latex et une forte interaction de ces flocs de latex avec les grains de ciment, ce qui provoque la formation d'une structure de gel de très forte viscosité.

Observation au microscope électronique à balayage

Des laitiers de ciment modifiés par un latex, avec ou sans stabilisant, ont été lyophilisés puis observés à l'aide d'un microscope électronique après avoir été soumis à une agitation à 85 °C jusqu'à épaississement complet.

Certains de ces laitiers ont été durcis durant 10 jours à la température indiquée ci-dessus, puis lyophilisés et examinés.

Lorsque l'on utilise un latex sans stabilisant, il coagule très vite lorsqu'on le soumet à un chauffage sous agitation.

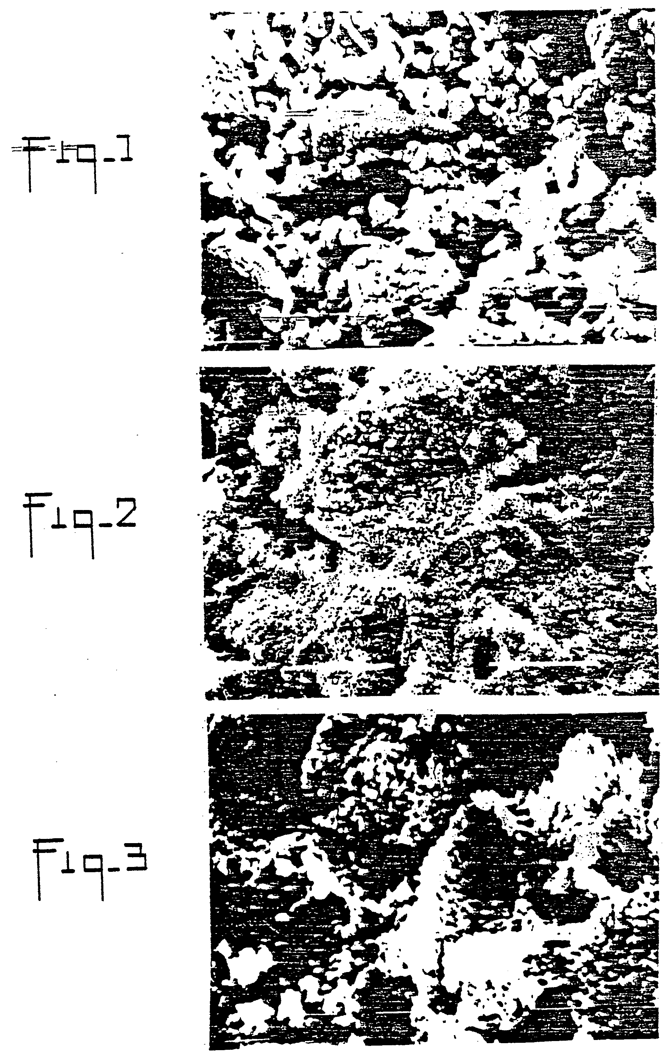

Cette coagulation est représentée (figure 1) par une floculation des particules de latex sur ou entre les grains de ciment, et il se forme une forte liaison entre les grains de ciment et les flocs de latex. Il se forme ainsi une structure de gel et le laitier de ciment ne peut plus être pompé.

Lorsque le latex est stabilisé avec le stabilisant tel que défini ci-dessus, il reste sous la forme de particules élémentaires de polymère, même 10 jours après la prise du ciment.

Ceci est particulièrement clair sur les figures 2 et 3 qui ne révèlent pas de flocs de latex ou de film de latex, et où l'on voit seulement de petites particules de polymère de dimension 0,2-0,4 μ, réparties uniformément dans toute la masse, sur ou entre les grains de ciment qui se sont hydratés normalement.

Exemple 2

Propriétés des laitiers de ciment

Les propriétés concernées ici sont le contrôle du filtrat, le contrôle de l'eau libre et le temps de pompage. Toutes ces propriétés sont mesurées à l'aide d'appareillages spéciaux et de spécifications correspondant à la norme API (American Petroleum Institute) [norme API, 10, 1re édition janvier 1982].

Les essais de filtrat, d'eau libre, et de période d'épaississement (temps de pompabilité) ont été effectués sur des compositions de laitiers de ciment contenant un latex de polystyrène-butadiène stabilisé par le sel de sodium du produit de condensation de l'acide β-naphtalènesulfonique avec le formaldéhyde.

Des essais comparatifs avec les mêmes laitiers de ciment ne contenant cependant pas de stabilisant n'ont été possibles qu'en ce qui concerne le temps de pompabilité, car les essais de filtrat et d'eau libre, habituellement effectués après que le laitier a été soumis à une agitation durant 20 min à la température adéquate, n'ont pas pu être mis en œuvre sur des laitiers qu'il n'était plus possible de couler.

On a également étudié la compatibilité avec des retardateurs de prise, ainsi que les possibilités de contrôle du temps de pompabilité, à l'aide d'un retardateur de prise du type lignosulfonate.

Données permettant de comparer les résultats avec des laitiers de ciment conventionnels, ne contenant pas de latex, à la température de 85 °C

Un bon contrôle du filtrat correspond à un taux de filtration inférieur à 150 ml/30 min.

Un très bon contrôle du filtrat correspond à un taux de filtration inférieur à 100 ml/30 min.

La teneur en eau libre ne doit pas dépasser de préférence 1,4 % du volume du laitier.

La courbe de période d'épaississement (courbe de pompabilité) doit être relativement plate jusqu'à l'épaississement du ciment (il ne doit pas y avoir de palier prématuré dû à une prise en gel) et l'on doit vérifier que l'épaississement du ciment est dû à l'hydratation du ciment et non au développement d'une structure de gel dont l'apparition serait provoquée par la coagulation du latex. Dans ce but, lorsque le laitier de ciment atteint le point à partir duquel il n'est plus pompable (correspondant à 100 unités de consistance), il est maintenu dans les mêmes conditions de température et de pression durant encore 30 min : si l'épaississement est dû à l'hydratation du ciment, 30 min plus tard, le ciment doit avoir la consistance d'un sol ou d'une roche plus ou moins friable et non plus la consistance d'une pâte.

Le tableau II ci-après rassemble les résultats concernant le filtrat, l'eau libre et la période d'épaississement, les essais ayant été effectués à 85 °C. Les courbes d'épaississement (courbes de pompabilité) sont représentées sur la figure 4.

L'agent antimousse utilisé est un polyglycol de poids moléculaire moyen 4000.

Le retardateur de prise utilisé est un dérivé de lignosulfonate.

Conclusions principales

Le contrôle du filtrat et le contrôle de l'eau libre sont toujours excellents (résultats inférieurs à 100 ml/30 min).

Lorsque l'on utilise un latex sans stabilisant, il coagule dans le laitier de ciment lorsqu'on le soumet à un chauffage et à une agitation, et il se forme une structure de gel qui se traduit par un plateau de prise en gel sur la courbe de pompabilité.

Ce plateau de prise en gel se situe aux alentours de 60 unités de consistance, ce qui est représentatif d'un laitier que l'on ne peut plus couler et qui est à peine pompable. Dans ce cas, lorsque le ciment atteint le maximum de consistance que l'on puisse enregistrer (100 unités de consistance), il est toujours sous la forme d'un gel.

Lorsque l'on utilise un latex et un stabilisant, il ne se produit pas de prise en gel et la consistance maximale enregistrée est représentative de l'hydratation du ciment.

Les latex de polystyrène-butadiène stabilisés avec l'agent stabilisant indiqué ci-dessus ne retardent pas la prise du ciment, et on peut parfaitement régler la période d'épaississement (par exemple dans la plage 4-5 h) à l'aide d'un retardateur de prise classique, que l'on utilise dans les concentrations habituelles.

## Exemple 3

### Propriété d'inhibition du cheminement du gaz des laitiers de ciment modifiés par un latex

La propriété d'inhibition du cheminement du gaz a été évaluée dans un appareillage de laboratoire conçu spécialement dans ce but et que l'on désigne sous le nom de cellule d'essai de cheminement du gaz.

Cet appareillage, qui est représenté schématiquement sur la figure 5, consiste essentiellement en deux colonnes séparées remplies de ciment.

Dans la première colonne, que l'on appelle cellule HP, on mesure la diminution de la pression dans les pores du ciment en fonction du temps, lorsque l'on soumet le ciment à une pression constante en tête de colonne à l'aide d'un piston, tandis que, dans la seconde cellule, que l'on désigne sous le nom de cellule DP, on mesure la propriété d'écoulement ou de cheminement du gaz dans la colonne de ciment, sous une pression différentielle constante, lorsque la pression dans les pores du ciment a suffisamment diminué dans la première cellule.

La propriété d'inhibition du cheminement du gaz dans un laitier de ciment peut ensuite être simplement déterminée par le débit maximal de gaz enregistré, tous les autres paramètres étant constants dans tous les essais.

Les conditions d'essai sont les suivantes :
— température : 85 °C
— pression en tête des deux cellules : 40 bars
— contre-pression dans la cellule DP : 35 bars ; on permet l'écoulement gazeux lorsque la pression dans les pores du ciment atteint 30 bars, c'est-à-dire a diminué de 40 bars à 30 bars.

L'agent antimousse consiste en un polyglycol de poids moléculaire moyen 4000.

L'additif thixotrope liquide consiste en une composition liquide aqueuse comprenant du sulfate de fer et du sulfate d'aluminium, telle que décrite dans le brevet britannique GB-A-2 030 976.

Le tableau III ci-après rassemble les résultats d'essais sur des laitiers conventionnels (*), des laitiers selon l'invention, un laitier sans stabilisant (**) et un laitier contenant un agent de surface non ionique (⊗).

### Conclusions principales

Les laitiers de ciment classiques (par exemple ne contenant pas de latex conduisent à des débits élevés de cheminement de gaz (entre 300 et 1 100 Scm$^3$/min), ce qui correspond à une absence de caractéristiques d'inhibition du cheminement du gaz.

Les laitiers de ciment contenant un latex à 19 % en poids par rapport au ciment et contenant la quantité adéquate de stabilisant correspondent à des débits de cheminement du gaz très faibles (3 et 25 Scm$^3$/min), ce qui correspond à une excellente caractéristique d'inhibition du cheminement du gaz.

Les laitiers de ciment contenant un latex mais ne contenant pas de stabilisant conduisent à des débits moyens (100 Scm$^3$/min). Il apparaît donc que, lorsque le latex n'est pas stabilisé, le mécanisme de formation d'un film provoquée par le passage du gaz ne se produit pas et que les résultats améliorés par rapport aux laitiers de ciment classiques ne sont que la conséquence d'un colmatage partiel et non uniforme des pores du ciment par les flocs du latex, ce qui réduit naturellement quelque peu la perméabilité du ciment.

## Exemple 4

### Mécanisme de l'inhibition du cheminement du gaz à l'aide d'un latex

Le mécanisme de l'inhibition du cheminement du gaz grâce à l'emploi d'un latex est illustré par les observations au microscope électronique à balayage : des échantillons provenant aussi bien de la cellule HP (où il n'y a pas d'écoulement gazeux) que de la cellule DP (où l'on permet l'écoulement gazeux) sont lyophilisés après les essais portant sur le cheminement du gaz, lorsque le ciment a durci, après quoi ces échantillons lyophilisés sont examinés au microscope électronique.

Les figures 6 et 7 correspondent à des échantillons provenant de la cellule HP et montrent clairement que les particules de latex sont totalement stabilisées dans le ciment durci, lorsqu'il n'y a pas de gaz, tandis que les figures 8, 9 et 10, qui correspondent à des échantillons provenant de la cellule DP, dans laquelle on fait passer le gaz, montrent une formation d'un film provoquée par la déshydratation résultant du passage du gaz.

La formation de barrières multiples de film de latex ou de films contenus est particulièrement visible sur les figures 8 et 9. Ces barrières de film ralentissent le cheminement du gaz, de plus en plus, jusqu'à un blocage complet du cheminement du gaz.

On notera également que, durant tous les essais portant sur le cheminement du gaz, menés avec des latex de poly(styrène-butadiène) stabilisés par le produit de condensation de naphtalènesulfonate et de formaldéhyde, on n'a jamais observé de cheminement du gaz à l'interface entre le ciment et la paroi métallique. Ceci n'est pas le cas lorsque l'on utilise des laitiers classiques. Cette propriété d'amélioration des liaisons entre le ciment et le métal, dans le cas d'un système contenant un latex stabilisé, a également été mise en évidence par des déterminations de la force d'adhésion mesurée par cisaillement.

Exemple 5 (exemple comparatif)

On a utilisé dans cet exemple des compositions de ciment contenant différents types de latex et, pour chaque composition, le stabilisant formaldéhyde/acide naphtalènesulfonique utilisé selon l'invention.

Les résultats, qui sont rassemblés dans le tableau IV ci-après montrent que, parmi les latex de types variés qui ont pu être essayés, seuls les latex styrène-butadiène sont utilisables puisque, pour les autres latex, le laitier ne peut pas être coulé, ce qui est un défaut évidemment rédibitoire.

Exemple 6

Un essai à 100 °C a été effectué sur le laitier suivant :

| | |
|---|---|
| ciment Cemoil classe G | |
| agent antimousse | 4,44 cm³/kg de ciment |
| latex Rhodopas SB012 | 23 % en poids par rapport au ciment |
| stabilisant (formaldéhyde-naphtalènesulfonate) | 5 % en poids par rapport au latex |
| eau fraîche | 19 % en poids par rapport au ciment |
| débit maximal d'écoulement gazeux | 2 Scm³/min |

Ce résultat est tout à fait excellent et les compositions selon l'invention sont donc utilisables même à 100 °C. De plus, le comportement du ciment pendant cet essai permet d'envisager une utilisation à des températures encore supérieures.

Exemples 7 (exemple comparatif), 8 et 9

Ces exemples portent sur l'incorporation de farine de silice pour permettre des températures d'utilisation plus élevées.

Les compositions de laitier de ciment utilisées ainsi que les résultats obtenus ont été rassemblés dans le tableau V ci-après.

On a utilisé la cellule pour essai représentée sur la figure 5 du dessin annexé.

Les conditions d'essai ont été les suivantes :
— température : 130 et 160 °C,
— pression en tête des deux cellules : 40 bars,
— contre-pression dans la cellule DP : 20 bars,
on permet l'écoulement gazeux lorsque la pression dans les pores du ciment atteint 18 bars, c'est-à-dire a diminué de 40 à 18 bars.

Conclusion principale

Un laitier de ciment classique ne contenant pas de latex (exemple 7, comparatif) conduit à un débit très élevé de cheminement de gaz, ce qui correspond à une absence de caractéristique d'inhibition du cheminement du gaz. Au contraire, un laitier de ciment contenant la quantité adéquate de latex et de stabilisant conduit à un débit de gaz nul que ce soit à une température de 130 °C ou à une température de 160 °C, ce qui correspond à une excellente caractéristique d'inhibition du cheminement du gaz (exemples 8 et 9 selon l'invention).

De plus, des analyses thermogravimétriques et thermodifférentielles ont permis de montrer que le latex préféré préconisé dans l'invention, polystyrène-butadiène contenant de 70 à 30 % en poids de styrène et de 30 à 70 % en poids de butadiène, ne commence à se dégrader sous l'effet de la température qu'à partir de 270 °C. Les autres constituants entrant dans la composition de ciment décrite dans l'invention, à savoir ciment, stabilisant et eau, n'étant pas dégradés par l'effet de température, au moins jusqu'à une température de 300 °C, il apparaît que l'invention est également applicable dans cette variante à des températures supérieures à 160 °C, la limite supérieure d'application étant fixée par la température de dégradation du latex utilisé, en l'occurrence 270 °C.

De telles températures permettent de traiter efficacement pour la première fois des puits profonds et même des puits de forage géothermique.

Exemple 10

Stabilisation des latex dans les laitiers de ciment à température élevée

La stabilité des latex dans les laitiers de ciment est appréciée par la mesure des caractéristiques rhéologiques du laitier, qui est présentée dans le tableau VI ci-après.

## 0 091 377

On règle tout d'abord la quantité de retardateur anionique pour obtenir un temps d'épaississement du ciment de 6 h puis on détermine la quantité de stabilisant donnant la stabilisation optimale du latex. Il a été découvert que, lorsque l'on utilise la quantité optimale de retardateur, la quantité de stabilisant peut être réduite de 60 %.

Tableau I

| Composition du laitier de ciment | Versabilité après 20 min d'agitation | Paramètres rhéologiques | | Température d'essai |
|---|---|---|---|---|
| | | PV (cP) | $YV_2$ ($g/m^2$) | |
| Composition de base : ciment 100 parties latex 14 % en poids/ciment stabilisant x % en poids/latex agent antimousse 0,4 % en poids/ciment eau 44% en poids/ciment moins le volume de l'additif liquide | | | | |
| Dyckerhoff Gulf Classe G Dow 465 (1) stabilisant 0 % | non versable | | | 85°C |
| Dyckerhoff Gulf Classe G Dow 465 stabilisant 8,0 % | versable | 35 | 292,98 | 85°C |
| Dyckerhoff North Classe G Litex 6301 (2) stabilisant 0 % | non versable | | | 85°C |
| Dyckerhoff North Classe G Litex 6301 stabilisant 16 % | versable | 26 | 1220,75 | 85°C |
| Cemoil Classe G Litex 6301 stabilisant 0 % | non versable | | | 85°C |
| Cemoil Classe G Litex 6301 stabilisant 16 % | versable | 22 | 244,15 | 85°C |
| Dyckerhoff North Classe G Rhodopas SB012 (3) stabilisant 0 % | non versable | | | 85°C |
| Dyckerhoff North Classe G Rhodopas SB012 stabilisant 4,0 % | versable | 26 | 48,83 | 85°C |
| Cemoil Classe G Rhodopas SB012 stabilisant 0 % | non versable | | | 85°C |
| Cemoil Classe G Rhodopas SB012 stabilisant 8,0 % | versable | 21 | 683,62 | 85°C |

(1) commercialisé par Dow Chemical Company
(2) commercialisé par Chemische Werke Hüls AG
(3) commercialisé par Rhône Poulenc Company
YV : seuil de cisaillement
PV : viscosité plastique

11

Tableau II

| Composition du laitier de ciment | (2) filtrat ml/30 min | (3) eau libre % en volume | Durée d'épaississement norme API 7g5 717,06 kg/cm² - 85°C | | |
|---|---|---|---|---|---|
| | | | 100 Bc en h:min | plateau de prise en gel à 100 Bc | pris en gel ou prise à 100 Bc |
| Laitier de base : ciment agent antimousse 0,4 % en poids/ciment latex x % en poids/ciment stabilisant y % en poids/latex retardateur de prise z % en poids/ciment eau 44 % - volume de l'additif liquide | | | | | |
| 1) Cemoil Classe G Rhodopas SB012 14 % stabilisant 8 % | 88 | 0 | 2:15 | NON | PRISE |
| 2) Cemoil Classe G (1) Rhodopas SB012 14 % | | | 2:50 | OUI | GEL |
| 3) Dyckerhoff North Classe G Rhodopas SB012 14 % stabilisant 8 % retardateur de prise 0,1 % | 88 | 0 | 5:00 | NON | ·PRISE |
| 4) Dyckerhoff Gulf Classe G Litex 6301 14 % stabilisant 12 % | 70 | 0 | | | |
| 5) Cemoil Classe G Litex 6301 14 % (1) | | | 3:00 | OUI | |
| 6) Dyckerhoff North Classe G Litex 6301 19 % stabilisant 20 % retardateur de prise 0,2 % | 60 | 0 | 4:00 | NON | PRISE |
| 7) Dyckerhoff Gulf Classe G Dow 465 14 % stabilisant 8 % | 28 | 0 | 1:13 | NON | PRISE |
| 8) Dyckerhoff Gulf Classe G Dow 465 14 % (1) 1) à 3) et 5) à 8): voir courbes correspondantes, figure 4. | | | 1:40 | OUI | GEL |

(1) essais d'épaississement effectués sous la pression atmosphérique

(2) tests effectués à 85 °C selon les normes API

(3) tests effectués à 85 °C selon une tentative de norme API

Tableau III

| Composition du laitier de ciment | Remarques | Débit maximal d'écoulement du gaz (Scm³/min) |
|---|---|---|
| Ciment Cemoil Classe G ✱<br>Polyéthylèneimine 35,52 cm³/kg<br>Formaldéhyde-naphtalènesulfonate :<br>1,78 cm³/kg<br>Agent antimousse 4,44 cm³/kg<br>Eau : 44 % en poids/ciment moins le<br>volume de l'additif liquide | Agent liquide classique de contrôle du filtrat | 1133 |
| Ciment Cemoil Classe A ✱<br>Additif thixotrope liquide :<br>71,05 cm³/kg<br>Agent antimousse 4,44 cm³/kg<br>Eau : 70 % en poids/ciment moins le<br>volume de l'additif liquide | Laitier thioxotrope classique | 1130 |
| Ciment Dyckerhoff Gulf Classe G ✱<br>Hydroxyéthylcellulose 1 % en<br>poids/ciment<br>Chlorure de calcium 2 % en<br>poids/ciment<br>Agent antimousse 4,44 cm³/kg<br>Eau : 44 % en poids/ciment moins le<br>volume de l'additif liquide | Agent solide classique de contrôle du filtrat de type cellulosique | 300 |
| Ciment Cemoil Classe G<br>Agent antimousse 4,44 cm³/kg<br>Rhodopas SB012 : 19 % en<br>poids/ciment<br>Formaldéhyde-naphtalènesulfonate :<br>3,6 % en poids/latex<br>Eau : 44 % en poids/ciment moins le<br>volume de l'additif liquide | Latex A<br>+<br>stabilisant | 3 |
| Ciment Cemoil Classe G<br>Agent antimousse 4,44 cm³/kg<br>Dow 465 : 19 % en poids/ciment<br>Formaldéhyde-naphtalènesulfonate :<br>6 % en poids/latex<br>Eau : 44 % en poids/ciment moins le<br>volume de l'additif liquide | Latex B<br>+<br>stabilisant | 25 |
| Ciment Cemoil Classe G ✱✱<br>Agent antimousse 4,44 cm³/kg<br>Rhodopas SB012 : 19 % en<br>poids/ciment<br>eau : 44 % en poids/ciment moins le<br>volume de l'additif liquide | Latex A<br>sans<br>stabilisant | 100 |

13

**0 091 377**

Tableau III (Suite)

| Composition du laitier de ciment | Remarques | Débit maximal d'écoulement du gaz $(Scm^3/min)$ |
|---|---|---|
| Ciment Dyckerhoff Gulf Classe G ⊗<br>Agent antimousse : 4,44 $cm^3$/kg<br>Litex 6301 : 19,0 % en poids/ciment<br>ANTAROX CO 977 (1) : 10 % en poids/latex<br>Eau : 44 % en poids/ciment moins le volume de l'additif liquide | Latex C<br>+<br>agent de surface non ionique | 120 |
| Ciment Dyckerhoff Gulf Classe G<br>Agent antimousse : 4,44 $cm^3$/kg<br>Litex 6301 : 19 % en poids/ciment<br>Formaldéhyde-naphtalènesulfonate :<br>10 % en poids/latex<br>Eau : 44 % en poids/ciment moins le volume de l'additif liquide | Latex C<br>+<br>stabilisant | 20 |

(1) Nonylphénol condensé avec 50 moles d'oxyde d'éthylène, commercialisé par la société GAF FRANCE

14

Tableau IV

| Composition du laitier du ciment | Nature de la résine | Fabricant | Versabilité après une agitation de 20 min | Paramètres rhéologiques PV (cp) | Température d'essai (°C) |
|---|---|---|---|---|---|
| Ciment : 100 parties<br>Latex : 14 % en poids/ciment<br>Stabilisant : 15 % en poids/latex<br>Agent antimousse : 0,4 % en poids/ciment<br>Eau : 44 % en poids/ciment moins le volume de l'additif liquide | | | | | |
| ACRONAL DS 3168 | acrylique | BASF | non versable | >500 | 85 |
| ACRYMUL AM 355 | acrylique | PROTEX | "      " | >500 | 85 |
| RHODOPAS DS 911 | styrène-acrylate | RHONE POULENC | "      " | >500 | 85 |
| MOWITON LP 3600 | styrène-acrylate | HOESCHT | "      " | >500 | 85 |
| MOWITON M 310 | vinylacétate-éthylène-vinyl-laurate | HOESCHT | "      " | ⟋ 500 | 85 |
| VINNAPAS CEP 15 | vinylacétate-éthylène-chlorure de vinyle | WACKERS | "      " | > 500 | 85 |
| VINNAPAS H 54/15 C | acétate de vinyle | WACKERS | "      " | > 500 | 85 |

0 091 377

0 091 377

Tableau V

| Exemple | Composition de laitier de ciment | Température °C | Débit maximal d'écoulement du gaz Scm$^3$/min |
|---|---|---|---|
| 7 (comparatif) | Ciment Dyckerhoff Gulf API Classe G<br><br>Farine de silice 35 % en poids/ciment<br><br>Retardateur de type lignosulfonate 0,4 % en poids/ciment<br><br>Agent antimousse 2 cm$^3$/kg<br><br>Eau : 56 % en poids/ciment moins le volume des additifs liquides | 130 | 5000 |
| 8 | Ciment Dyckerhoff Gulf API Classe G<br><br>Farine de silice 30 % en poids/ciment (+)<br><br>Retardateur de type lignosulfonate 0,6 % en poids/ciment<br><br>Formaldéhyde naphtalènesulfonate 3 % en poids/latex<br><br>Rhodopas SB012 23 % en poids/ciment<br><br>Antimousse 4,44 cm$^3$/kg<br><br>Eau : 60 % en poids/ciment moins le volume des additifs liquides | 130 | 0 |
| 9 | Ciment Dyckerhoff API Classe G<br><br>Farine de silice 35 % en poids/ciment (+)<br><br>Retardateur de type lignosulfonate 1,5 % en poids/ciment<br><br>Formaldéhyde naphtalènesulfonate 6 % en poids/latex<br><br>Rhodopas SB012 28 % en poids/ciment<br><br>Antimousse 4,44 cm$^3$/kg<br><br>Eau : 56 % en poids/ciment moins le volume des additifs liquides | 160 | 0 |

RHODOPAS SB012 : latex styrène-butadiène 50/50 en poids

(+) Répartition granulométrique de la farine de silice

$< 100\ \mu : 100\ \%$

$<\ 50\ \mu :\ 90\ \%$

$<\ 20\ \mu :\ 45\ \%$

$<\ 10\ \mu :\ 23\ \%$

$<\ \ 5\ \mu :\ \ 8\ \%$

# 0 091 377

Tableau VI

| | Paramètres rhéologiques | | | Temps d'épaississement (1127 kg/cm², 118°C, API 9g5) |
|---|---|---|---|---|
| | Température d'essai (°C) | PV (cp) | YV (g/100 cm²) | |
| **Laitier de base**<br><br>Ciment Dyckerhoff Gulf API classe G<br>Agent antimousse 0,4 % en poids/ciment<br>Latex Rhodopas SB012 19 % en poids de ciment<br>Stabilisant : x % en poids de latex<br>Retardateur : y % en poids de ciment<br>Farine de silice 35 % en poids de ciment<br>Eau 44 % en poids de ciment moins le volume des additifs liquides | | | | |
| Stabilisant 5 %<br>Retardateur 0 % | 85 | 30 | 0,976 | 0 h 50 min |
| Stabilisant 0 %<br>Retardateur 0,35 % | 85 | 50 | 19,52 | 6 h 05 min |
| Stabilisant 2 %<br>Retardateur 0,35 % | 85 | 32 | 0,488 | 6 h 15 min |

Retardateur : mélange 1/1 en poids de lignoamine et de glucoheptonate de sodium
PV : viscosité plastique
YV : seuil de cisaillement

## Revendications

1. Compositions de laitiers de ciments pour cimentation de puits pétroliers, améliorant les propriétés du ciment et inhibant le cheminement du gaz sous pression dans l'annulaire cimenté, même à température élevée, caractérisées en ce qu'elles contiennent les composants suivants :
— ciment hydraulique,
— latex styrène-butadiène (70/30 à 30/70 de motifs styrène/butadiène, % en poids) en proportion de 5 % à 30 % en poids par rapport au ciment,
— stabilisant du latex choisi parmi les sels de métaux alcalins du produit de condensation de l'acide mononaphtalène sulfonique et de formaldéhyde, de préférence le sel de sodium en proportion de 1-20, de préférence 3-15 % en poids par rapport au latex,
— eau en proportion d'environ 30 à 60 % en poids par rapport au ciment moins le volume du latex et du stabilisant.
2. Compositions selon la revendication 1, caractérisées en ce que le latex contient environ 50 % de motifs styrène et 50 % de motifs butadiène.
3. Compositions selon la revendication 1, caractérisées en ce que le latex contient environ 66 % en poids de motifs styrène et 33 % en poids de motifs butadiène.
4. Composition selon l'une quelconque des revendications 1 à 3, caractérisée en ce que sa composition est la suivante :
— ciment API classe G,
— latex : Rhodopas SB012 (styrène-butadiène 50/50 % en poids), la concentration en latex dépendant de la température d'application :

| | |
|---|---|
| 30 °C | 5-10 % |
| 50 °C | 10-15 % |
| 85 °C | 15-20 % |
| 100 °C | 20-25 % |
| > 110 °C | 20-30 % |

— stabilisant : sel de sodium du produit de condensation de l'acide mononaphtalènesulfonique avec le formaldéhyde à raison de 3-15 % en poids de latex,

— eau douce : environ 30 à 60 % en poids de ciment et, de préférence, 38 à 46 % en poids de ciment, dans le cas du Portland, moins le volume du latex + stabilisant.

5. Compositions selon l'une quelconque des revendications 1 à 4, caractérisées en ce que la proportion de latex est de 20 à 30 % en poids par rapport au ciment et en ce qu'elles contiennent de 20 à 50 % en poids par rapport au ciment d'une farine de silice de répartition granulométrique comparable à celle de la poudre de ciment.

6. Compositions selon la revendication 5, caractérisées en ce qu'elles comprennent :

— ciment API classe G Dyckerhoff Gulf,
— farine de silice
(% en poids par rapport au ciment)     30    35
— retardateur type lignosulfonate
(% en poids par rapport au ciment)     0,6    1,5
— latex stryrène-butadiène (50/50 en poids)
(% en poids par rapport au ciment)     23    28
— stabilisant du latex (formaldéhyde-naphtalènesulfonate)
(% en poids par rapport au latex)     3    6
— antimousse (cm³/kg)     4,44    4,44
— eau (% en poids par rapport au ciment moins le volume des additifs liquides)     60    56

7. Compositions selon l'une quelconque des revendications 1 à 6, caractérisées en ce qu'elles contiennent de plus un ou plusieurs additifs pour ciments tels qu'agent antimousse, retardateur de prise, allégeant ou alourdissant et autres additifs conventionnels.

8. Procédé de cimentation d'un puits permettant d'empêcher le cheminement de gaz sous pression dans l'annulaire cimenté, jusqu'à une température de 100-110 °C, caractérisé en ce que l'on cimente le puits de manière classique, en utilisant pour la cimentation une composition selon l'une quelconque des revendications 1 à 7, ne comportant pas de farine de silice.

9. Procédé de cimentation d'un puits pétrolier ou géothermique permettant d'empêcher le cheminement du gaz sous pression dans l'annulaire cimenté, jusqu'à plus de 250 °C, caractérisé en ce que l'on cimente le puits de manière classique en utilisant pour la cimentation une composition selon la revendication 5 ou 6.

## Claims

1. Cement slag compositions for the cementation of oil wells, improving the properties of the cement and inhibiting gas channeling under pressure in the cemented annular space, even at high temperature, characterized in that they contain the following components :

— hydraulic cement,

— styrene-butadiene latex (70/30 to 30/70 styrene/butadiene units, % by weight) in a proportion of from 5 % to 30 % by weight with respect to the cement,

— latex stabiliser selected from the alkali metal salts of the condensation product of mononaphthalenesulfonic acid and formaldehyde, preferably the sodium salt in a proportion of 1-20, preferably 3-15 % by weight with respect to the latex,

— water in a proportion of approximately 30 to 60 % by weight with respect to the cement less the volume of the latex and the stabiliser.

2. Compositions according to claim 1, characterized in that the latex contains approximately 50 % of styrene units and 50 % of butadiene units.

3. Compositions according to claim 1, characterized in that the latex contains approximately 66 % by weight of styrene units and 33 % by weight of butadiene units.

4. A composition according to any one of claims 1 to 3, characterized in that its composition is as follows :

— API cement class G,

— latex : Rhodopas SB012 (styrene-butadiene 50/50 % by weight), the concentration of latex depending on the use temperature :

| | |
|---|---|
| 30 °C | 5-10 % |
| 50 °C | 10-15 % |
| 85 °C | 15-20 % |
| 100 °C | 20-25 % |
| > 110 °C | 20-30 % |

— stabiliser : sodium salt of the condensation product of mononaphthalenesulfonic acid with formaldehyde at a rate of 3-15 % by weight of latex,

— fresh water : approximately 30 to 60 % by weight of cement and, preferably, 38 to 46 % by weight of cement, in the case of Portland, less the volume of latex + stabiliser.

5. Compositions according to any one of claims 1 to 4, characterized in that the proportion of latex is from 20 to 30 % by weight with respect to the cement and in that they contain from 20 to 50 % by weight with respect to the cement of a silica flour with a granulometric distribution comparable to that of the cement powder.

6. Compositions according to claim 5, characterized in that they comprise :

— API cement class G Dyckerhoff Gulf,
— silica flour
(% by weight with respect to the cement)    30    35
— retarder of the lignosulfonate type
(% by weight with respect to the cement)    0.6    1.5
— styrene-butadiene latex (50/50 by weight)
(% by weight with respect to the cement)    23    28
— latex stabiliser (formaldehyde-
naphthalenesulfonate)
(% by weight with respect to the latex)    3    6
— antifoaming agent ($cm^3/kg$)    4.44    4.44
— water (% by weight with respect to
the cement less the volume of liquid
additives)    60    56

7. Compositions according to any one of claims 1 to 6, characterized in that they further contain one or more cement additives such as an antifoaming agent, a setting retarder, a lightener or weight-increaser and other conventional additives.

8. A method of cementing a well permitting the prevention of gas channeling under pressure in the cemented annular space up to a temperature of from 100 to 110 °C, characterized in that the well is cemented in the conventional manner, using for cementation a composition according to any one of claims 1 to 7, not comprising silica flour.

9. A method of cementing an oil or geothermal well permitting prevention of gas channeling under pressure in the cemented annular space, at up to more than 250 °C, characterized in that the well is cemented in the conventional manner using for cementation a composition according to claim 5 or claim 6.

**Patentansprüche**

1. Schlackenzement-Zusammensetzung zur Zementation von Ölbohrlöchern, die die Eigenschaften von Zement verbessert und das Entweichen von Gas unter Druck auch bei erhöhter Temperatur aus der zementierten Ringform verhindert, dadurch gekennzeichnet, daß sie die folgenden Komponenten enthält :
— Bindemittel,
— Styrol-Butadienlatex (70/30 bis 30/70 Einheiten Styrol/Butadien Gew.-%) im Verhältnis von 5 Gew.-% bis 30 Gew.-%, bezogen auf den Zement,
— Latex-Stabilisator, ausgewählt aus den Alkalisalzen des Kondensationsproduktes von Mononaphthalinsulfonsäure und Formaldehyd, vorzugsweise das Natriumsalz im Verhältnis von 1 bis 20, bevorzugt 3 bis 15 Gew.-%, bezogen auf den Latex,
— Wasser im Verhältnis von etwa 30 bis 60 Gew.-%, bezogen auf den Zement abzüglich des Volumens des Latex und des Stabilisators.

2. Zusammensetzung nach Anspruch 1, dadurch gekennzeichnet, daß der Latex ungefähr 50 % Styroleinheiten und 50 % Butadieneinheiten enthält.

3. Zusammensetzung nach Anspruch 1, dadurch gekennzeichnet, daß der Latex ungefähr 66 Gew.-% Styroleinheiten und 33 Gew.-% Butadieneinheiten enthält.

4. Zusammensetzung nach einem der Ansprüche 1 bis 3, dadurch gekennzeichnet, daß die Zusammensetzung wie folgt ist :
— Zement API, Klasse G,

**0 091 377**

— Latex : Rhodopas SB012 (Styrol-Butadien 50/50 Gew.-%), wobei die Konzentration des Latex von der Anwendungstemperatur abhängt :

| | |
|---|---|
| 30 °C | 5 bis 10 % |
| 50 °C | 10 bis 15 % |
| 85 °C | 15 bis 20 % |
| 100 °C | 20 bis 25 % |
| > 110 °C | 20 bis 30 % |

— Stabilisator : Natriumsalz des Kondensationsproduktes von Mononaphthalinsulfonsäure mit Formaldehyd in einer Menge von 3 bis 15 Gew.-% des Latex,
— weiches Wasser : ungefähr 30 bis 60 % des Gewichts des Zementes und vorzugsweise 38 bis 46 % des Gewichts des Zementes, im Fall von Portland-Zement abzüglich des Volumens von Latex und Stabilisator.

5. Zusammensetzung nach einem der Ansprüche 1 bis 4, dadurch gekennzeichnet, daß das Verhältnis des Latex 20 bis 30 Gew.-%, bezogen auf den Zement, beträgt und daß sie 20 bis 50 Gew.-%, bezogen auf den Zement Kieselerdemehl mit einer Korngrößenverteilung, die der des Zementpulvers vergleichbar ist, enthält.

6. Zusammensetzung nach Anspruch 5, dadurch gekennzeichnet, daß sie umfaßt :

| | | |
|---|---|---|
| — Zement API, Klasse G Dyckerhoff Gulf, | | |
| — Kieselerdemehl (Gew.-%, bezogen auf Zement) | 30 | 35 |
| — Verzögerer vom Lignosulfonattyp (Gew.-%, bezogen auf Zement) | 0,6 | 1,5 |
| — Styrol-Butadien-Latex (50/50 Gew.) (Gew.-%, bezogen auf den Zement) | 23 | 28 |
| — Stabilisator für Latex (Formaldehyd-Naphthalinsulfonat) (Gew.-%, bezogen auf den Latex) | 3 | 6 |
| — Entschäumer (cm³/kg) | 4,44 | 4,44 |
| — Wasser (Gew.-%, bezogen auf den Zement abzüglich des Volumens der flüssigen Additive) | 60 | 56 |

7. Zusammensetzung nach einem der Ansprüche 1 bis 6, dadurch gekennzeichnet, daß sie zusätzlich ein oder mehrere Additive für Zement enthält wie Entschäumungsmittel, Abbindeverzögerer, erleichternde oder beschwerende und andere übliche Zusatzmittel.

8. Verfahren zur Zementation von Bohrlöchern, bei dem das Entweichen von Gas unter Druck in einer zementierten Ringform bis zu einer Temperatur von 100 bis 110 °C verhindert werden kann, dadurch gekennzeichnet, daß man das Bohrloch in der klassischen Weise zementiert, wobei man für die Zementation eine Zusammensetzung nach einem der Ansprüche 1 bis 7 verwendet, die kein Kieselerdemehl enthält.

9. Verfahren zur Zementation von Ölbohrlöchern oder geothermischen Bohrlöchern, bei dem das Entweichen von Gas unter Druck durch die zementierte Ringform bis zu einer Temperatur von mehr als 250 °C verhindert werden kann, dadurch gekennzeichnet, daß man das Bohrloch in klassischer Weise zementiert, wobei man für die Zementation eine Zusammensetzung nach einem der Ansprüche 5 oder 6 verwendet.

20

0 091 377

Fig-1

Fig-2

Fig-3

Fig-4

Fig-5

0 091 377

Fig.6

Fig.7

Fig.8

Fig.9

Fig.10